# EUROPEAN PATENT APPLICATION

(11) **EP 1 718 052 A1**
(43) Date of publication of application: **02.11.2006**
(21) Application number: 06400006.0
(22) Date of filing: 23.02.2006
(51) Int. Cl.: H04M 3/533

(54) **Voice mail system with phone number recognition**

(30) Priority: 29.04.2005 US 119090
(71) Applicant: Alcatel, 75008 Paris (FR)
(72) Inventor: Rao, Kashipati G., TX 75025 Plano (US); Jachner, Jack, Lexington, MA 02420 (US)
(74) Representative: Schäfer, Wolfgang

(57) **Abstract**

A system for providing return calls includes a voice mail system (10) for storing voice messages for playback through a user device and a phone number recognition system (12) for detecting a phone identifier audibly embedded in a voice message. The detected phone number is used to establish a telecommunications connection between the user device and a telephonic device associated with a detected phone identifier responsive to a user input.

## Description

### TECHNICAL FIELD

This invention relates in general to telecommunications and, more particularly, to a voice mail system with capability to extract telephone numbers from a message.

### DESCRIPTION OF THE RELATED ART

Over the last twenty years, voice mail systems have become an indispensable tool for businesses and individuals. In a voice mail system, a message is electronically recorded for future playback by the intended recipient. In many systems, the caller ID information associated with a call is stored with the voice message, to identify the calling party. Some voice mail systems will allow the intended recipient (the "receiving party") to call the calling party at the phone number retrieved from the stored caller ID information. Independent from the voice mail system, the receiving party's phone may store the caller ID information in a call log.

Thus, the receiving party has several options for returning a missed call. First, he can access the call log and select the calling party's number. Second, with some voice mail systems, he can request a return call to the party by pressing a designated key.

However, in many cases, the calling party may request a return call at a number other than the number from which the original call was made. For example, the calling party may leave a voice message instructing the receiving party to call a home number, work number or mobile phone number. In other cases, where the calling party is calling through a private switch, the caller ID information may indicate a general number instead of the calling party's direct number. Thus, a phone number given in a voice message may differ from the caller ID number. This requires the receiving party to either write down the number and then dial, or memorize the number and dial. Neither option is particularly convenient; with mobile phones, the receiving party may not be in good position to either write down the number or dial - for instance, where the receiving party is driving an automobile.

Therefore, a need has arisen for a method and apparatus for returning phone calls that does not rely on caller ID information.

### Brief Summary of the Invention

In the present invention, a system for providing return calls comprises circuitry for storing voice messages for playback through a user device and a voice recognition system for detecting a phone identifier audibly embedded in a voice message. Communications circuitry establishes a telecommunications connection between the user device and a telephonic device associated with a detected phone identifier responsive to a user input.

### Brief Description of the Several Views of the Drawings

For a more complete understanding of the present invention, and the advantages thereof, reference is now made to the following descriptions taken in conjunction with the accompanying drawings, in which:
Figure 1 illustrates a generalized embodiment of the present invention;
Figure 2 illustrates a state diagram showing operation of the phone number recognition system;
Figure 3 illustrates an embodiment using an answering system of the type that could be used in a home or small office which includes a phone number recognition system;
Figure 4 illustrates an embodiment using a voice mail system having a phone number recognition system coupled to a local phone switch, such as a PBX (private branch exchange) or a KSU (key service unit) or variation thereof;
Figure 5 illustrates a voice mail system having a phone number recognition system which is accessible to users through a central office;
Figure 6 illustrates a variation of the implementation of Figure 4, where the local phone switch is coupled to a media server implementing the voice mail system through a network;
Figure 7 illustrates an embodiment using VOIP (voice over internet protocol) or "packet" phones and a voice mail system implemented in a media server; and
Figure 8 illustrates an embodiment using a phone with an integrated phone number recognition system.

### Detailed Description of the Invention

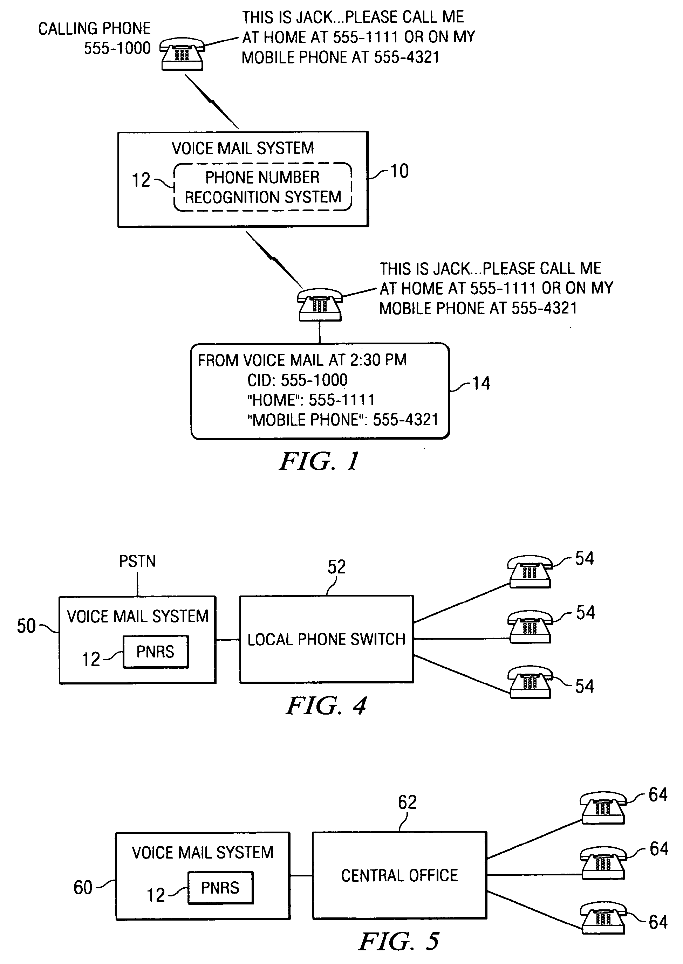

The present invention is best understood in relation to Figures 1 - 8 of the drawings, like numerals being used for like elements of the various drawings.

Figure 1 illustrates a generalized embodiment of the present invention. A calling party initiates a call to a receiving party, but the call is directed to a voice mail system 10. As with a typical voice mail system 10, the call could be redirected to the voice mail system 10 because the receiving party is on another connection, or the receiving party does not answer, or the receiving party has redirected all incoming calls to the voice mail system, or for another reason. The calling party is invited by the voice mail system 10 to leave a message.

The voice mail system 10 includes a phone number recognition system function that extracts a string of numbers that could be a telephone number from the voice mail message. The recognition system could be performed as the message is received from the calling party, after the message is stored in a file in, or accessible to, the voice mail system 10, or upon command by the receiving party. The phone number recognition system function 12 could also store predefined words, such as "home", "work", "cell", and so on, along with the extracted number to further identify the number. Additionally, the phone number recognition system function 12 could store (or identify) a "snippet" of the voice message from which the number is obtained for playback, if selected by the receiving party.

The extracted phone number (or numbers) is then presented to the receiving party. The time and manner of presenting the extracted phone numbers can differ upon implementation. In one embodiment, the extracted phone numbers are added to a call log (and, preferably, identified as extracted phone numbers). From the call log, the receiving party can simply return the call by pressing a number on the log.

For more convenience, it is useful to associate a phone number with a particular phone, if such information is provided in the voice message. For example, as shown in Figure 1, the call log 14, provides the caller ID phone number (i.e., the number of the phone that originated the call that resulted in the voice message), a "home" number of 555-1111 (extracted from the phrase "please call me at home at 555-1111") and a mobile phone number of 555-4321 (extracted from the phrase "or on my mobile phone at 555-4321"). The receiving party could select any one of the three numbers to return the call.

In some instances, it may be desirable to hear a snippet of the voice message from which the phone number was extracted. Hearing the snippet may be useful if the receiving party does not think that the phone number was correctly extracted, or if the association between the number and the phone type is incorrect. Hence, by highlighting the extracted number and pressing a predefined key, the substantive portion of the voice mail is replayed. This allows the user to verify the phone number information without listening to an entire voice message.

Call log is just one of several options which could be used to present the extracted number information to the receiving party. The extracted number(s) could be audibly output to the receiving party after listening to the message using voice prompts. For example, an text-to-speech engine could be used to present the numbers as follows:
Press or speak '1' to call the originating phone at 555-1000
Press or speak '2' to call the "home" phone at 555-1111 Press or speak '3' to call the "mobile phone" at 555-4321

A third option is to provide a graphical or text display similar to, but separate from, the call log. This display could be enabled whenever the receiving party accessed the voice mail system 10.

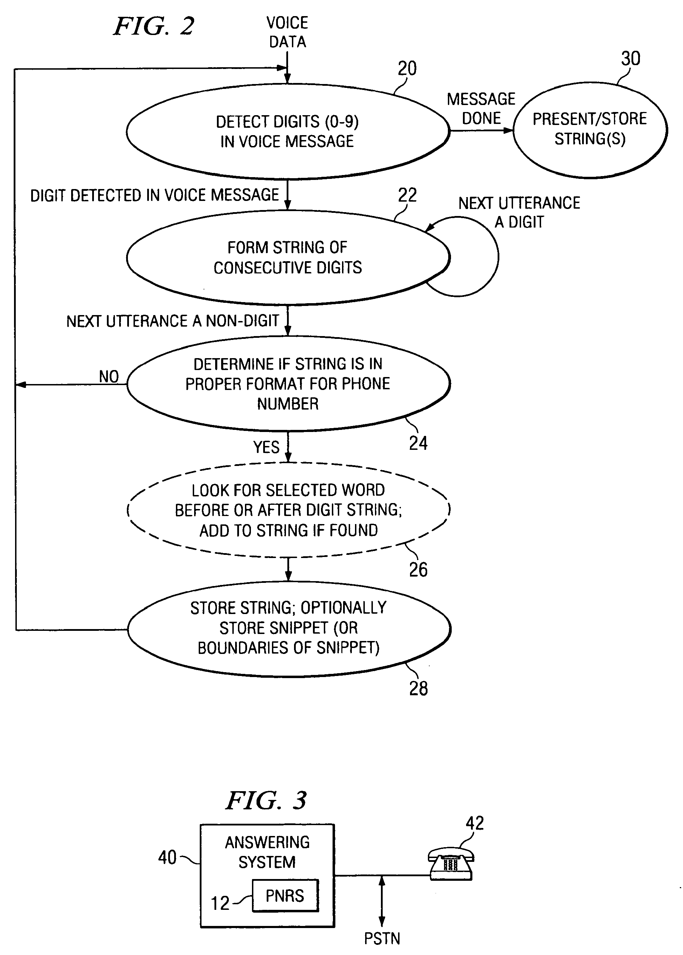

Figure 2 illustrates a state diagram showing a preferred operation of the phone number recognition system task 12. Voice data, received either in real-time or retrieved from a stored voice mail message file (such as a .wav file or an .mp3 file) is processed in state 20 using standard speech recognition techniques. Various voice recognition software development tools can be used to translate an audio file into speech, such as the DRAGON NATURALLYSPEAKING software developer kit (SDK) from SCANSOFT of Peabody, Massachusetts. The voice recognition software could translate the entire message into text, or it could detect digits (or alphanumeric characters and, optionally, selected words related to phone numbers).

In state 22, once a digit is detected, additional digits are concatenated into a string, until a non-digit utterance is detected, indicating that the sting of numbers is complete. A complete string of digits is analyzed in state 24 to determine if the string could be a telephone number. In the preferred embodiment, state 24 recognizes multiple formats, such as 7-digit dialing (###-####, where # represents a digit), 10-digit dialing (###-###-####), international dialing, and so on.

In state 26, a selected related word ("home", "work", and so on) is associated with a properly formatted phone number. If so, it is added to the string.

In state 28, the string is stored (or, optionally, immediately presented to the receiving party). A snippet from the voice file can be stored with the string for review by the receiving party. In order to reduce storage requirements, the boundaries of the snippet within the voice message file can be stored in reference to the recorded voice message, rather than storing the snippet as a separate audio file.

Additional strings can be detected from states 20 through 28, until review of the voice message is completed. If the strings are stored, they are presented in state 30 upon completion of the review.

It should be noted that the state diagram of Figure 2 shows one way of detecting numbers, while multiple methods for detecting numbers could be used, as would be known to one skilled in the art. Further, while the state diagram of Figure 2 refers to the detection of digits, it is understood that "digits" could be detected in groups; for instance, the number 555-1492 could be spoken as "five-five-five-one-four-nine-two", "five-five-five-fourteen-ninety-two", or "five-fifty-five-fourteen-ninety-two". In these examples, "fourteen" would be translated as a two digit string "14". Similarly, "three thousand" would be translated as a four digit string "3000".

Figures 3 through 7 illustrate various examples of hardware configurations in which the present invention could be implemented. The various configurations shown in these figures are not meant to be comprehensive of all possible configurations.

In Figure 3, an answering system 40, of the type that could be used in a home or small office, includes a phone number recognition system (PNRS) 12. The answering system 40 could be a standalone system or integrated in the phone 42.

In operation, phone messages are stored in the answering system 40. The PNRS 12 extracts the phone number data from the messages and presents the phone number data to the user for callback. If the user selects one of the numbers, the answering system can provide the DTMF or pulse tones for completing the callback.

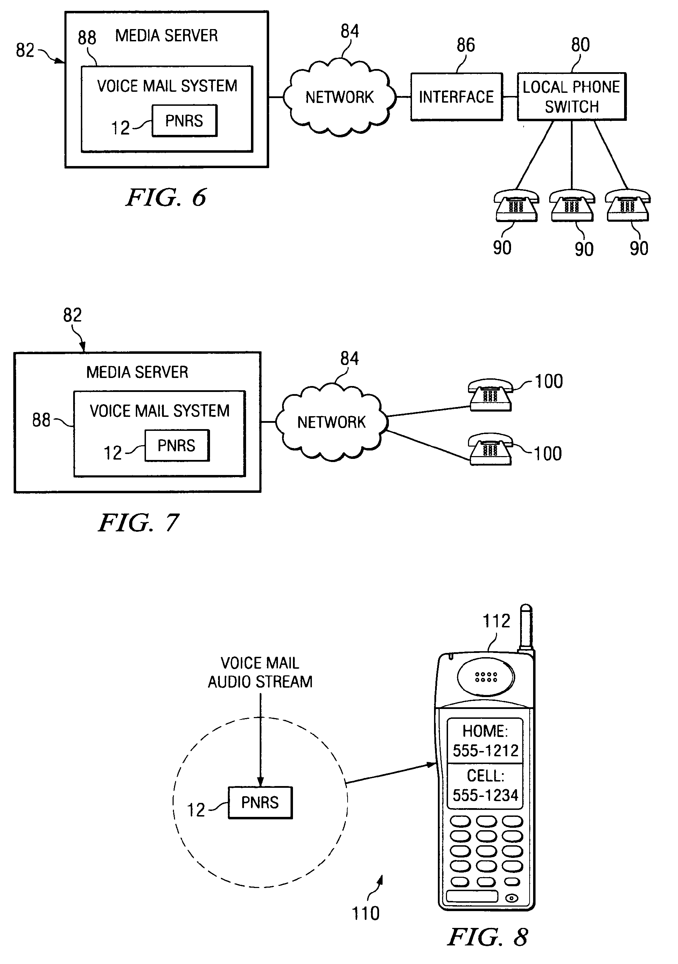

In Figure 4, a voice mail system 50 having a PNRS 12 is coupled to a local phone switch 52, such as a PBX (private branch exchange) or a KSU (key service unit) or variation thereof. The local phone switch 52 couples a plurality of phones 54 with a number of incoming PSTN (public switched telephone network) lines. The number of phones may be greater or less than the number of PSTN lines. The voice mail system 50 may be integrated with the local phone switch 52.

In operation, unanswered calls and other voice messages are directed to the voice mail system 50 by local phone switch. Likewise, each user can access the voice mail system 50 through the local phone switch. The PNRS 12 extracts the phone number data from the messages and presents the phone number data to the user for callback. The local phone switch 52 then initiates a connection with a selected callback number.

Figure 5 illustrates a voice mail system 60 which is accessible to users through a central office 62. Central office 62 is coupled to a plurality of phones 64.

Unanswered calls and other voice messages are directed to the voice mail system by the central office 62.

In operation, the implementation of Figure 5 operates similarly to Figure 4, with the exception that the central office 62 passes calls to the voice mail system 60 rather than the local phone switch 52. The central office 62 then initiates a connection with a selected callback number.

Figure 6 illustrates a variation of the implementation of Figure 4, where the local phone switch 80 is coupled to a media server 82 through a network 84, which could be, for example, the Internet. An interface 86 may be used to couple the local phone switch 80 to the network 84. Media server 82 hosts a voice mail server 88, including a PNRS 12. Local phone switch 80 is coupled to a plurality of phones 90.

In operation, the implementation of Figure 6 works identically to the implementation of Figure 4, with the exception that the voice mail and phone number extraction functions are performed remotely on a media server 82. The local phone switch 52 then initiates a connection with a selected callback number.

Figure 7 illustrates an embodiment of the present invention using VOIP (voice over internet protocol) or "packet" phones 100. Packet phones 100 both set up call and communicate over one or more digital networks, such as the Internet. The operation of this configuration is similar to Figure 6 with the phones setting up a virtual connection with the media server 82, rather than through switch 80.

The PNRS 12 could extract number using different methods. In a first embodiment, the PNRS could use speech recognition to extract number only when requested by the user. This embodiment uses the least amount of processing resources, because it only extracts phone number when requested.

In a second embodiment, phone numbers could be extracted from a selected voice message contemporaneously with the playback of the message. At the end of playback, the numbers could be presented to the user, audibly, visually or both audibly and visually.

In a third embodiment, phone numbers could be extracted in real-time as the voice message was being recorded, and stored for later access by the user.

In a fourth embodiment, phone numbers could be extracted from voice messages after they have been recorded, but prior to access by the user. If a message was accessed by the user prior to number extraction, the extraction could be performed as the message was being played to the user.

It should be noted that the phone numbers recognized herein could be in any form that identifies the callback device. For example, a packet phone 100 could be identifiable using an network address, such as an IP address, to identify the callback device. Thus, "255.255.255.10" could be a legitimate callback number. Further, while it is assumed that callback numbers include only numbers, it would also be identify telephone number with alphanumeric numbers as well, such as "1-800-gopizza" or domain names which map to a packet phone network address, such as "gopizza.com". Also, it could identify additional switching information such as "555-555-1212 extension 348."

Figure 8 illustrates another embodiment of the present invention where the PNRS 12 is implemented in a phone 110. Currently, some phones have internal voice recognition circuitry (typically implemented using a digital signal processor) used for providing hands free dialing. In the embodiment of Figure 8, the voice recognition functionality would be expanded in the PNRS 12 to recognized phone numbers received in a voice mail audio stream. The voice mail audio stream could be received from any voice mail system to which the phone can connect, including voice mail messages stored on the phone itself. When the user accesses a voice mail system, the PNRS 12 is activated. The PNRS scans voice messages for phone numbers, as described above, and presents the phone numbers to the user. In the embodiment shown in Figure 8, the numbers are shown on a display 112, but other methods of presentation could be used as well. The user then selects one of the numbers (if multiple numbers are found) and commands the phone 110 to dial the selected number.

The following features, separately or in any combination, may also constitute advantageous embodiments of the described or claimed invention:
- The claimed and/or described system wherein the communication circuitry includes circuitry internal to the user device for initiating a communication session between the user device and the telephonic device associated with the detected phone identifier;
- The claimed and/or described system wherein the phone identifier comprises a string of digits;
- The claimed and/or described system wherein the phone identifier comprises a string of alphanumeric characters;

The claimed and/or described system wherein the phone identifier comprises a network address;
- The claimed and/or described system wherein the phone identifier comprises a domain name;
- The claimed and/or described system wherein the phone identifier is associated with a descriptive word from the voice message;
- The claimed and/or described method wherein the detecting step comprises the step of detecting a string of alphanumeric characters;
- The claimed and/or described method wherein the detecting step comprises the step of detecting a network address;
- The claimed and/or described method and further comprising the step of associating the phone identifier with a descriptive word from the voice message;
- A telephonic user device comprising: circuitry for receiving audio from a stored voice message; circuitry for recognizing a phone identifier in the message; circuitry for initiating a communication session with the recognized phone identifier responsive to a user command.

Although the Detailed Description of the invention has been directed to certain exemplary embodiments, various modifications of these embodiments, as well as alternative embodiments, will be suggested to those skilled in the art. The invention encompasses any modifications or alternative embodiments that fall within the scope of the Claims.

## Claims

1. A system for providing return calls, comprising:
circuitry for storing voice messages for playback through a user device;
a voice recognition system for detecting a phone identifier audibly embedded in a voice message; and
communications circuitry for establishing a telecommunications connection between the user device and a telephonic device associated with a detected phone identifier.

2. The system of claim 1 wherein the communications circuitry includes a central office switch.

3. The system of claim 1 wherein the communication circuitry includes a local phone switch.

4. The system of claim 3 wherein the local phone switch is a private branch exchange.

5. The system of claim 3 wherein the local phone switch is a key service unit.

6. A method for providing return calls, comprising:
storing voice messages for playback through a user device;
detecting a phone identifier using audibly embedded in a voice message using voice recognition software; and
establishing a telecommunications connection between the user device and a telephonic device associated with a detected phone identifier.

7. The method of claim 6 wherein the establishing step comprises the step of establishing a telecommunications connection between the user device and the telephonic device at a central office switch.

8. The method of claim 6 wherein the establishing step comprises the step of establishing a telecommunications connection between the user device and the telephonic device at a local phone switch.

9. The system of claim 6 wherein the establishing step comprises the step of initiating a communication session between the user device and the telephonic device associated with the detected phone identifier internal to the user device.

10. The method of claim 6 wherein the detecting step comprises the step of detecting a string of digits in one of a plurality of formats.
